# EUROPEAN PATENT APPLICATION

(11) **EP 1 775 791 A1**
(43) Date of publication of application: **18.04.2007**
(21) Application number: 05766473.2
(22) Date of filing: 12.07.2005
(51) Int. Cl.: H01M 8/04, B65D 83/00, F17C 13/00

(54) **CONNECTION STRUCTURE OF FUEL CARTRIDGE FOR FUEL CELL**

(30) Priority: 16.07.2004 JP 2004210816; 20.07.2004 JP 2004212079
(71) Applicant: Tokai Corporation, Tokyo 151-0073 (JP)
(72) Inventor: KANNO, Minoru c/o Fuji Oyama Factory, Oyama-cho Sunto-gun, Shizuoka 410-1431 (JP)
(74) Representative: Lukaszyk, Szymon
(86) International application number: PCT/JP2005/013212
(87) International publication number: WO 2006/009130

(57) **Abstract**

Erroneous installation of fuel cell fuel cartridges, in which different kinds or fuels are received on an apparatus, is prevented. The fuel cell fuel cartridge has a container body (2) that is provided with a fuel supply opening (10) for supplying a fuel and with a connecting circular tube body (20) surrounding the fuel supply opening (10) and has a fuel storage chamber that is formed inside the container body (2) to receive the liquid fuel to the supplied to a fuel cell. The shape of the circular tube body (20) varies according to the kind of fuel stored in the fuel storage chamber.

## Description

### Technical Field

The present invention relates to a connection structure of a fuel cartridge for a fuel cell which is used to connect the fuel cell cartridge with a fuel cell device to supply gaseous and liquefied fuel to a fuel cell.

### Background Art

Although fuel cells are well known as effective small-scale power sources for personal computers (notebook computers, PDA and the like) and other small-scale devices, these solutions can not be efficiently exploited without using fuel cartridges supplying fuel to these cells. Therefore, there still exists a need for providing improved fuel cartridges.

Typical, known fuel cartridge is provided with (a) a container main body comprising (i) a fuel supply opening which faces outward and (ii) a connection cylindrical body which surrounds the fuel supply opening, and (b) a fuel storage chamber which is used to store the liquefied fuel which is supplied to the fuel cell.

It is commonly known that fuels such as methanol and variety of other fuels of various constituent compositions are used as the aforementioned fuel. The used fuels may have the same constituents but with different concentrations thereof and they may also be pressurized. As a result, it is possible that fuels with different constituents may be supplied to the fuel cell. For this reason, a reference groove is formed to prevent the cartridge from being erroneously connected to a device. Nevertheless, in this case the orientation is substantially permanently determined and there are problems, as that the type of connection pattern which can be used is limited and a large number of combinations cannot be employed.

### Disclosure of the Invention

The connection structure of fuel cartridge for fuel cell according to the present invention is a connection structure which is used to connect a fuel cell cartridge having (a) a container main body which is provided with (i) a fuel supply opening used to supply fuel and (ii) a connection protruding body surrounding said fuel supply opening and (b) a fuel storage chamber formed inside the container main body and used to store the fuel supplied to the fuel cell; and a fuel cell device provided with a connection part corresponding to the connection protruding body, and is characterised in that, it is provided with
a reference protrusion or reference groove which is the reference mark for the absolute position and is formed on said connection protruding body, and one or more selection protrusions or selection grooves formed at relatively different positions, according to the type of fuel used, relative to the reference protrusion or reference groove,
a device-side reference groove or device-side reference protrusion corresponding to said reference protrusion or reference groove and a device-side selection groove or device-side reference protrusion corresponding to said selection protrusion or selection groove, formed on the connection part of said fuel cell device;
and it is configured so that said fuel supply opening opens only when said fuel cartridge is inserted so that it reaches the indicated position, wherein said reference protrusion or groove interlocks with said device-side reference groove or protrusion and said selection protrusion or groove interlocks with said device-side selection groove or protrusion.

The aforementioned types of fuel differ in dependence of used constituents, concentration and pressure of the fuel.

Preferably said reference protrusion or reference groove is longer and/or wider and/or deeper than said selection protrusion or selection groove.

Advantageously different colours are provided to at least part of said fuel cartridge and at least part of said fuel cell device in dependence on the type of used fuel.

A fuel cartridge for fuel cell according to the present invention is provided with (a) a container main body comprising (i) a fuel supply opening used to supply fuel and (ii) a connection protruding body surrounding said fuel supply opening; and (b) a fuel storage chamber formed inside the container main body which is used to store the fuel supplied to the fuel cell, and is characterised in that, it is provided with a reference protrusion or reference groove which is the reference mark for the absolute position, and which is formed on said connection protruding body, and one or more selection protrusions or selection grooves formed at relatively different positions, according to the type of fuel used, relative to the reference protrusion or reference groove.

Preferably different colours are provided to at least part of said container main body and the colours are placed at positions which are visible from the outside.

The connection structure of fuel cartridge for fuel cell according to the present invention is characterized by having a reference protrusion or reference groove corresponding to the device-side reference groove or device-side reference protrusion, wherein the cartridge-side reference protrusion or reference groove is formed on the connection protrusion body, and a reference protrusion or reference groove corresponding to the device-side selection groove or device selection protrusion formed at the position depending on the type of used fuel, wherein said cartridge-side protrusion or grooves are formed on the connection protrusion body of the fuel cartridge.

As a result, it is easy to position a cartridge in relation to a fuel cell device and a fuel cartridge in which different types of fuel are stored can not be installed on a fuel cell device constructed to use different fuel, thereby preventing erroneous installation.

In particular, when the width and/or depth of the reference protrusion or reference groove of the fuel cartridge is broader and deeper than the width of the selection protrusion or selection groove, there is no interlocking with a part other than the reference groove or the reference protrusion even if the user unconsciously tries to connect it. As a result, the fuel opening does not open since connection is not complete, thereby ensuring safety.

In addition, even when the selection groove is made longer than the reference groove, the device-side selection protrusion is formed in such a position that it interlocks with the cartridge-side selection groove at the midway of the insertion stroke for the connection protrusion body. As a result, only the reference groove is inserted so that the fuel cartridge which stores different types of fuel, is positioned in such a manner that only the reference groove is inserted up to the midpoint. As a result, the cartridge is not installed on the device and the fuel supply opening does not open, thereby ensuring safety.

The present invention is also useful since a large number of patterns being a combination of selection protrusion and/or selection grooves, may be formed and used. By marking the fuel cell device and the fuel cartridge with the same color according to the type of fuel used, the user can easily recognize whether the devices are compatible.

### Brief Explanation of Figures

Fig. 1 is a cross-sectional front view of an example of the fuel cartridge for a fuel cell according to the present invention.
Fig. 2 is a perspective top view of a first exemplary embodiment of the fuel cartridge for a fuel cell according to the present invention.
Fig. 3 is a perspective top view of a second exemplary embodiment of the fuel cartridge for a fuel cell according to the present invention.
Fig. 4 is a perspective top view of a third exemplary embodiment of the fuel cartridge for a fuel cell according to the present invention.
Fig. 5 is a perspective top view of a fourth exemplary embodiment of the fuel cartridge for a fuel cell according to the present invention.
Fig. 6 is a perspective top view of a fifth exemplary embodiment of the fuel cartridge for a fuel cell according to the present invention.
Fig. 7 is a perspective top view of a sixth exemplary embodiment of the fuel cartridge for a fuel cell according to the present invention.

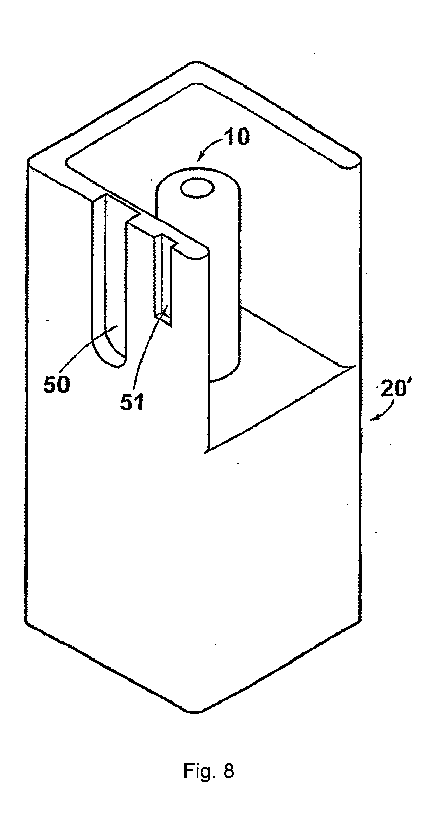

Fig. 8 is a perspective top view of a seventh exemplary embodiment of the fuel cartridge for a fuel cell according to the present invention.

### Advantageous embodiments of the present invention

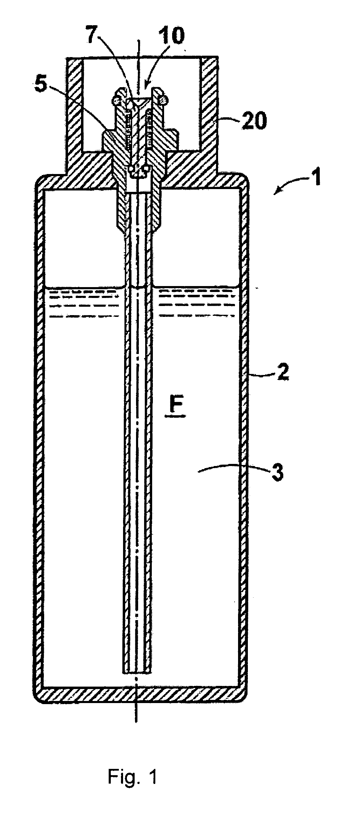

Below, we shall describe principles of working of the present invention referring to figures. Fig. 1 presents is a cross-sectional front view of an example of the fuel cartridge for a fuel cell to which the present invention is applied.

The fuel cartridge for a fuel cell, as shown in Fig. 1, is used to store the fuel F for a fuel cell and supplies fuel directly or via a pressure adjuster to the fuel cell device (not shown).

This fuel cartridge is provided with (a) a nozzle 5 which in turn is provided with a fuel supply opening 10 used to supply the fuel; (b) a container main body 2 which in turn is provided with a connection cylindrical body 20 surrounding the fuel supply opening 10; and (c) a fuel storage chamber 3 constituting the interior of the container main body 2, which stores the fuel F that is to be supplied to the fuel cell. A valve 7 is disposed inside the nozzle 5.

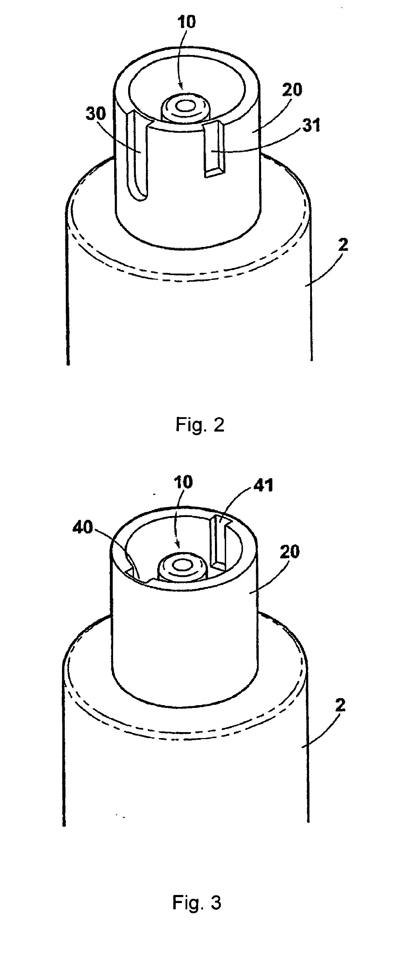

Fig. 2 is a perspective top view of the first exemplary embodiment of the present invention. A reference groove 30, which is an absolute position reference mark, extends on the outer peripheral surface of the cylindrical body 20 beginning from the top edge of the body 20 in the insertion direction of the cylindrical body 20, wherein the body 20 is a connection protrusion body. Additionally, as many selection grooves 31 (in this embodiment one), as are preset for the different types of fuel (in this case) extend at a position which has been preset in the direction of installation of the cylindrical body 20 from the end of cylindrical body 20. The aforementioned reference groove 30 is made so that it is broader than the width of the selection groove 31 and deeper than the groove as well.

According to the construction of the cartridge, a device-side reference protrusion corresponding to the aforementioned reference groove 30 and a device-side selection protrusion corresponding to the aforementioned selection groove 31 are formed on the connection part of the fuel cell device (not shown). This device-side selection protrusion is formed in such a way that it interlocks with the selection groove 31, at the midway of the insertion stroke of the cylindrical body 20.

The aforementioned reference groove 30 has the width and the depth that is greater correspondingly than the width and the depth of the selection groove 31.

Consequently, the aforementioned device-side reference protrusion is also made broader than the width of and higher than the device-side selection protrusion. In consequence, the cartridge can not be operatively coupled with the device provided with part differing from the reference groove 30, even if the user tries to connect these elements unconsciously. As a result, valve 7 shall not be opened as the connection is not complete. In addition, the reference groove 30 is made longer than the selection groove 31 and the device-side selection protrusion is formed at a position where it interlocks with the cartridge-side selection groove 31 at midpoint of the insertion of the cylindrical body 20. As a result, where only the reference groove 30 is inserted, the fuel cartridge in which different types of fuel are stored, has such a position in relation to the device that only the reference groove is inserted at midpoint. It may not be correctly installed on the device and the fuel supply opening may not open what thereby ensures exploitation safety. Thereby, even if the user starts to erroneously install a fuel cartridge in which different type of fuel is stored, only the reference groove 30 will be inserted at midpoint.

Fig. 3 is a perspective top view of a second exemplary embodiment of the present invention. One reference groove 40, which extends from the top edge of the cylindrical body 20 in the insertion direction of the cylindrical body 20, is formed on the inside periphery surface of the cylindrical body 20. Additionally, a single selection groove 41, which is shorter than the reference groove 40, is formed at a predefined position that depends on the type of fuel used.

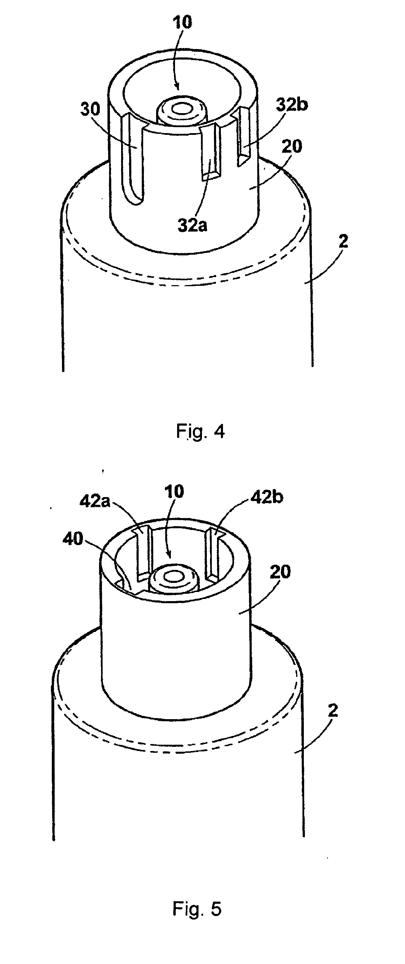

Fig. 4 is a perspective top view of a third exemplary embodiment of the present invention. One reference groove 30, which extends from the top edge of the cylindrical body 20 in the insertion direction of the cylindrical body 20, is formed on the outside periphery surface of the cylindrical body 20. Two selection grooves 32a, 32b, which are shorter than the reference groove 30, are formed at predefined positions that depend on the type of fuel used.

Fig. 5 is a perspective top view of a fourth exemplary embodiment of the present invention. One reference groove 40, which extends from the top edge of the cylindrical body 20 in the insertion direction of the cylindrical body 20, is formed on the inside periphery surface of the cylindrical body 20. Two selection grooves 42a, 42b, which are shorter than the reference groove 40, are formed at predefined positions that depend on the type of fuel used.

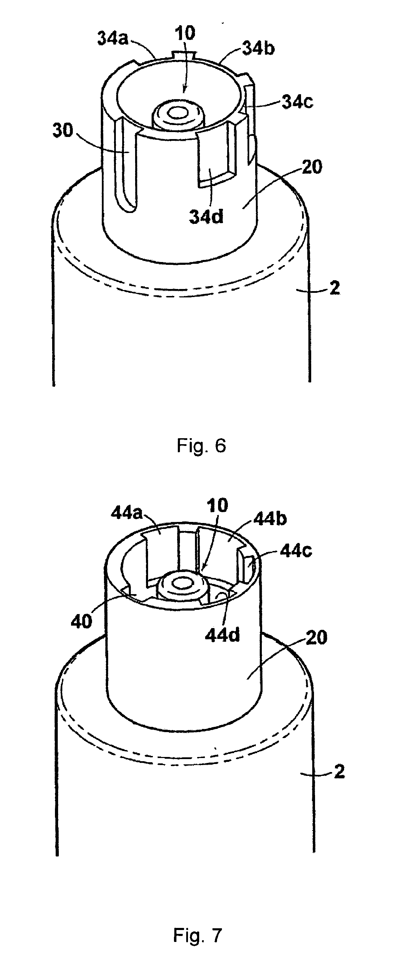

Fig. 6 is a perspective top view of a fifth exemplary embodiment of the present invention. One reference groove 30, which extends from the top edge of the cylindrical body 20 in the insertion direction of the cylindrical body 20, is formed on the outside periphery surface of the cylindrical body 20. Four selection grooves 34a, 34b, 34c, 34d, which are shorter and relatively wider than the reference groove 30, are formed at predefined locations that depend on the type of fuel used.

Fig. 7 is a perspective top view of a sixth exemplary embodiment of the present invention. One reference groove 40, which extends from the top edge of the cylindrical body 20 in the insertion direction of the cylindrical body 20, is formed on the inside periphery surface of the cylindrical body 20. Four selection grooves 44a, 44b, 44c, 44d, which are shorter and relatively wider than the reference groove 40, are formed at predefined positions that depend on the type of fuel used.

Furthermore, in the aforementioned exemplary embodiments of the invention, only one reference groove 30 or 40 is disposed for positioning purpose. However, multiple reference grooves may be disposed symmetrically to the centre of the cylindrical body. The selection grooves may also be formed symmetrically to the centre of the cylindrical body. In addition, the selection groove may be disposed on both the outside periphery and the inside periphery of the cylindrical body. A large number of combination patterns may be used that feature different widths and/or positions of the selection grooves.

In addition, in the aforementioned exemplary embodiments of the invention, the selection grooves were disposed on the inside and outside peripheries of the cylindrical bodies 20 to provide some variations in the shape of the cylindrical body 20. However, the choice is not limited only to grooves, and appropriate protrusions may be used as well. The diameter of the cylindrical body 20 may be changed according to the type of used fuel.

In the aforementioned exemplary embodiments, the cylindrical body 20 serves as a connection protruding body. However, the invention is not limited to such a solution and a reference groove 50 and a selection groove 51 may be also disposed on the outside periphery surface of the protruding body 20', which has e.g. a semi-rectangular cross-section with one, left-hand side wall being removed.

In the embodiments of the invention as described above, the shape of the protruding body was varied according to the type of used fuel. A fuel cartridge according to the invention may also be used as a container for fuels that are different than those mentioned. In addition, the same colour may be placed on at least the fuel cell device and the cartridge or the main body for given types of fuels so that they can be easily identified.

### Industrial Applicability

As indicated above, the connection structure of the fuel cartridge for fuel cell according to the present invention is suitable for preventing erroneous installation of fuel cartridges on devices wherein the cartridges may store different types of fuels supplied to fuel cells used as a small-scale power source for portable personal computers (notebook computers, PDAs and the like).

## Claims

1. A connection structure of fuel cartridge for fuel cell which is used to connect a fuel cell cartridge having (a) a container main body which is provided with (i) a fuel supply opening used to supply fuel and (ii) a connection protruding body surrounding said fuel supply opening and (b) a fuel storage chamber formed inside the container main body and used to store the fuel supplied to the fuel cell; and a fuel cell device provided with a connection part corresponding to the connection protruding body, **characterised in that**, it is provided with
a reference protrusion or reference groove which is the reference mark for the absolute position and is formed on said connection protruding body, and one or more selection protrusions or selection grooves formed at relatively different positions, according to the type of fuel used, relative to the reference protrusion or reference groove,
a device-side reference groove or device-side reference protrusion corresponding to said reference protrusion or reference groove and a device-side selection groove or device-side reference protrusion corresponding to said selection protrusion or selection groove, formed on the connection part of said fuel cell device;
and it is configured so that said fuel supply opening opens only when said fuel cartridge is inserted so that it reaches the indicated position, wherein said reference protrusion or groove interlocks with said device-side reference groove or protrusion and said selection protrusion or groove interlocks with said device-side selection groove or protrusion.

2. The connection structure according to claim 1 wherein said reference protrusion or reference groove is longer than said selection protrusion or selection groove.

3. The connection structure to claim 1 wherein said reference protrusion or reference groove is wider than said selection protrusion or selection groove.

4. The connection structure according to claim 1 wherein said reference protrusion or reference groove is deeper than said selection protrusion or selection groove.

5. The connection structure according to claim 1 wherein different colours are provided to at least part of said fuel cartridge and at least part of said fuel cell device in dependence on the type of used fuel.

6. A fuel cartridge for fuel cell which is provided with (a) a container main body comprising (i) a fuel supply opening used to supply fuel and (ii) a connection protruding body surrounding said fuel supply opening; and (b) a fuel storage chamber formed inside the container main body which is used to store the fuel supplied to the fuel cell, **characterised in that**, it is provided with a reference protrusion or reference groove which is the reference mark for the absolute position, and which is formed on said connection protruding body, and one or more selection protrusions or selection grooves are formed at positions which locations relative to said reference protrusion or groove depend on the type of the fuel stored in said cartridge.

7. The fuel cartridge according to claim 6 wherein said reference protrusion or reference groove is longer than said selection protrusion or selection groove.

8. The fuel cartridge according to claim 6 wherein said reference protrusion or reference groove is wider than said selection protrusion or selection groove.

9. The fuel cartridge according to claim 6 wherein said reference protrusion or reference groove is deeper than said selection protrusion or selection groove.

10. The fuel cartridge according to claim 6 wherein different colours are provided to at least part of said container main body and the colours are placed at positions which are visible from the outside.
